## Europäisches Patentamt
## European Patent Office
## Office européen des brevets

(19)

(11) Numéro de publication : **0 161 991**
**B1**

(12)
# FASCICULE DE BREVET EUROPÉEN

(45) Date de publication du fascicule du brevet :
**20.09.89**

(51) Int. Cl.⁴ : **G 01 N 21/73**

(21) Numéro de dépôt : **85400915.6**

(22) Date de dépôt : **10.05.85**

(54) Enceinte étanche blindée équipée pour être utilisable en spectrométrie d'émission.

(30) Priorité : **14.05.84 FR 8407411**

(43) Date de publication de la demande :
**21.11.85 Bulletin 85/47**

(45) Mention de la délivrance du brevet :
**20.09.89 Bulletin 89/38**

(84) Etats contractants désignés :
**BE CH DE GB IT LI SE**

(56) Documents cités :
**FR—A— 1 462 304**
**FR—A— 2 564 233**
**US—A— 4 300 834**

(73) Titulaire : **COMPAGNIE GENERALE DES MATIERES NUCLEAIRES (COGEMA)**
**2, rue Paul Dautier B.P. 4**
**F-78141 Velizy-Villacoublay (FR)**

(72) Inventeur : **Andrieu, Guy**
**Route des Cévennes**
**F-30200 Bagnols Sur Ceze (FR)**
Inventeur : **Blanchard, Jean-Marc**
**Vers Le Pont du Gard**
**F-30210 Remoulins (FR)**
Inventeur : **Sourrouille, Michel**
**1, rue Alexandre Dumas**
**F-30290 Laudun (FR)**

(74) Mandataire : **Mongrédien, André et al**
**c/o BREVATOME 25, rue de Ponthieu**
**F-75008 Paris (FR)**

EP 0 161 991 B1

Jouve, 18, rue St-Denis, 75001 Paris, France

## Description

La présente invention a pour objet une enceinte étanche blindée équipée pour être utilisable en spectrométrie d'émission.

La méthode d'analyse par spectrométrie d'émission est connue depuis plusieurs décennies, avec ses sources traditionnelles arc-étincelle.

Actuellement, une nouvelle source, dite source « ICP », de l'expression anglaise « inductive coupling plasma », est mise en œuvre dans de nombreux laboratoires.

Dans ces appareillages connus, une source de puissance à haute fréquence alimente en énergie électrique un inducteur de forme cylindrique creuse réalisé par l'enroulement en spires successives d'un tube de cuivre creux à l'intérieur duquel circule de l'eau de refroidissement.

La solution comprenant les éléments chimiques à analyser est véhiculée sous forme de brouillard par un courant de gaz neutre, tel que de l'argon, circulant axialement à l'intérieur des spires de l'inducteur, de sorte que les puissances élevées à une fréquence suffisante, dissipées par cet inducteur, créent dans une zone axiale de cet inducteur un plasma à haute température.

Un spectromètre, centré sur ce plasma, permet de déterminer et quantifier les différents cations présents dans la solution par l'étude du spectre d'émission.

Cette méthode permet l'analyse des cations dans des limites de détection voisines du micrograme/litre autorisant des dilutions très importantes des éléments à analyser dans la solution.

En outre, cette méthode d'analyse n'entraîne qu'une très faible consommation de solution, de l'ordre de 5 ml/heure, lorsque la nébulisation est réalisée par ultra sons.

Un autre avantage de cette méthode est la rapidité de l'analyse qui est faite en environ une minute par élément dosé.

Enfin, la précision obtenue, de l'ordre de 1 %, est nettement améliorée par rapport aux autres sources à plasma utilisables, à arc ou étincelle.

Ces avantages de cette méthode d'analyse présentent un intérêt tout particulier, pour des raisons de sécurité nucléaire, lorsque l'on souhaite analyser des éléments radioactifs de produits de fission, puisqu'elle n'utilise que des quantités infimes de ces éléments.

Néanmoins, il est nécessaire de procéder à l'analyse en enceinte étanche blindée.

La présente invention est, de manière plus précise, relative à l'équipement d'une enceinte étanche permettant l'application de la méthode d'analyse par spectrométrie d'émission exposée ci-dessus à des éléments chimiques radioactifs en solution.

Comme cela est bien connu en technologie nucléaire, lorsque l'on conçoit un appareillage devant fonctionner en enceinte blindée, on s'efforce de ne placer à l'intérieur de cette enceinte que le minimum de pièces, dispositifs ou équipements de l'appareillage et de réaliser ces divers composants de telle sorte qu'ils soient les plus simples possibles pour être aisément maniés à l'aide de télémanipulateurs, et que leur fiabilité et durée de vie soient maximales.

Dans le cas de l'appareillage de spectrométrie d'émission concernée par l'invention, l'idée générale directrice de la conception de l'appareillage a donc consisté à ne loger à l'intérieur de l'enceinte blindée que sa partie active au contact d'éléments radioactifs, c'est-à-dire la source à plasma à couplage inductif, et à disposer à l'extérieur de l'enceinte blindée le générateur à haute fréquence, d'une part, et le spectromètre d'autre part.

Pour ce faire, il fallait tout d'abord éloigner physiquement cette source à plasma du générateur à haute fréquence d'une distance de plusieurs dizaines de centimètres afin de pouvoir traverser la paroi blindée d'une enceinte.

Ce premier problème a été résolu par une première invention, due aux mêmes inventeurs et qui est décrite dans le document FR-A-2 564 233 déposé le 11 mai 1984 et ayant pour titre « Inducteur perfectionné pour source à plasma, utilisable en spectrométrie d'émission ».

Cet inducteur est caractérisé en ce qu'il comprend deux conducteurs d'alimentation d'une longueur comprise entre 20 et 40 cm constitués de deux tubes creux d'acier inoxydable raccordés en une de leurs extrémités à des spires réalisées en un tube creux d'acier inoxydable, leurs autres extrémités étant destinées à être raccordées électriquement à un générateur à haute fréquence, et des moyens étant prévus pour faire circuler de l'air de refroidissement à l'intérieur desdits tubes creux raccordés.

La présente invention a pour but de fournir un appareillage d'équipement d'une enceinte étanche adapté à ce type d'inducteurs et à la configuration générale d'appareillage de spectrométrie d'émission, mentionnés ci-dessus.

A cet effet, la présente invention a pour objet une enceinte étanche blindée équipée pour être utilisable en spectrométrie d'émission, caractérisée en ce qu'elle comporte, en association :

un dispositif de traversée d'une paroi de l'enceinte blindée, destiné à faire passer deux tubes creux d'une longueur comprise entre 20 et 40 cm, ces tubes appartenant à un inducteur de source à plasma comprenant de plus des spires en forme de tube creux reliant les extrémités des tubes creux situées à l'intérieur de l'enceinte, les autres extrémités de ces tubes étant prévues pour être raccordées électriquement à un générateur à haute fréquence et pour communiquer avec des moyens de circulation d'air de refroidissement ; le dispositif de traversée comprenant des moyens d'isolation électrique des tubes entre eux et par rapport à des parties métalliques de la paroi, et de protection biologique,

une cage de Faraday à l'intérieur de laquelle est placé ledit inducteur, et mise à la masse avec les parties métalliques de la paroi,

une hotte d'aspiration d'air placée au-dessus de l'inducteur, et comprenant des moyens de refroidissement de cet air, et

une sortie en chicane de la paroi blindée équipée d'un miroir pour permettre avec protection biologique la sortie optique d'une image du plasma.

A titre d'exemple, on décrira ci-après un mode de mise en œuvre de l'invention.

On se reportera au dessin annexé, sur lequel :

la figure 1 représente une vue de dessus schématique d'un appareillage de spectrométrie d'émission dont la partie active est localisée à l'intérieur d'une enceinte blindée équipée selon l'invention,

la figure 2 est une vue ·partielle en coupe horizontale montrant plus en détail le dispositif de traversée de la paroi blindée, et

la figure 3 est une vue partielle en coupe verticale montrant plus en détail la cage de Faraday ainsi que la hotte d'aspiration d'air et ses moyens de refroidissement.

Comme exposé précédemment, l'appareillage de spectrométrie d'émission comprend essentiellement un générateur à haute fréquence, schématisé en 1, alimentant en énergie électrique l'inducteur 2 d'une source à plasma et le spectre d'émission de ce plasma est analysé par un spectromètre, schématisé en 3.

Pour appliquer la méthode d'analyse par spectrométrie d'émission à des éléments radioactifs, contenus à l'intérieur d'une enceinte étanche blindée 4, on n'a localisé à l'intérieur de l'enceinte 4 que l'inducteur 2 constituant la partie active de la source à plasma et maintenu à l'extérieur le générateur à haute fréquence 1 et le spectromètre 3.

A cet effet, selon une des premières dispositions de l'invention, on a éloigné physiquement de quelques dizaines de centimètres l'inducteur 2 du générateur à haute fréquence 1, ce qui devient possible avec un inducteur tel que faisant l'objet de la demande de brevet précitée à laquelle on se reportera pour une description complète et détaillée de ce nouveau type d'inducteur. Il suffit ici de mentionner que cet inducteur est alimenté électriquement par deux tubes 5 creux en acier inoxydable refroidis à l'air d'une longueur de 20 à 40 cm suffisante pour éloigner le générateur 1 de l'inducteur 2 et permettre leur passage à travers la paroi blindée de l'enceinte étanche 4 par un dispositif de traversée 6.

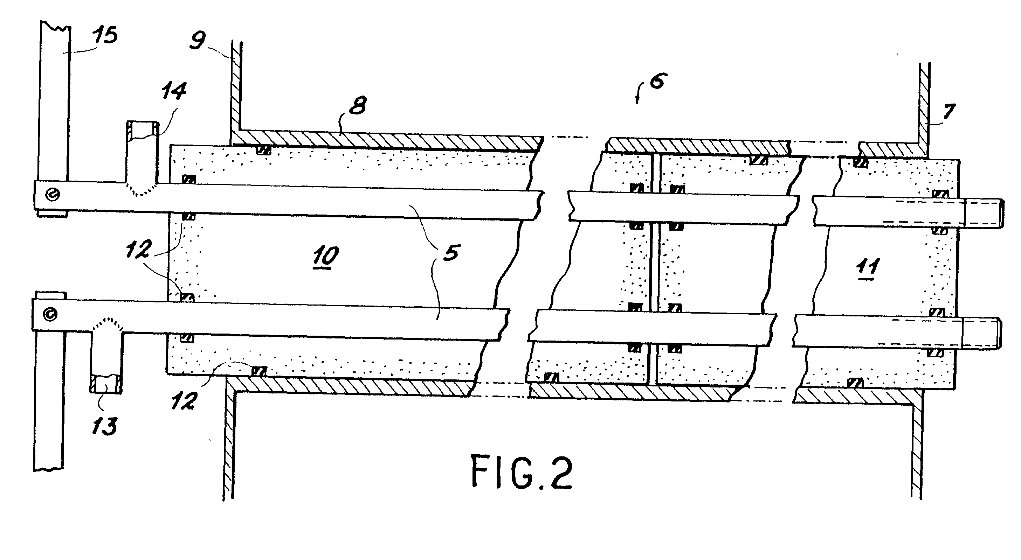

La figure 2 représente plus en détail ce dispositif de traversée 6. La paroi métallique extérieure arrière 7 de l'enceinte blindée 4 est raccordée par un manchon métallique cylindrique 8 à la paroi 9 de fond verticale du générateur à haute fréquence 1. Les deux tubes 5 d'alimentation de l'inducteur sont isolés à l'intérieur de deux blocs successifs 10 et 11 réalisés par exemple en matière plastique, telle que la matière plastique connue sous la dénomination commerciale de « téflon ». Des joints 12, réalisés par exemple en matière plastique, telle que la matière plastique connue sous la dénomination commerciale de « viton » complètent l'étanchéité électrique et nucléaire de ce dispositif de sortie.

De l'air de refroidissement est introduit dans l'un des tubes 5 par une entrée 13, circule à l'intérieur des tubes 5 et des spires de l'inducteur 2, et ressort par une sortie 14 formée dans l'autre tube. Les tubes 5 sont connectés électriquement au cadre de réception HF 15 du générateur.

Les deux blocs 10 et 11 constituent un dispositif pousse-pousse connu en soi permettant le remplacement, partiel ou total, de la protection sans rupture d'étanchéité au rayonnement α et avec une protection minimale au rayonnement γ qui est celle garantie alors par l'un seul des deux blocs 10 et 11, et ceci à partir de l'extérieur de l'enceinte. De même, cette réalisation du dispositif de traversée permet, à partir de l'extérieur de l'enceinte, de déconnecter les tubes 5 de ceux formant les spires de l'inducteur 2 lorqu'il est nécessaire ou utile de remplacer ou changer cet inducteur.

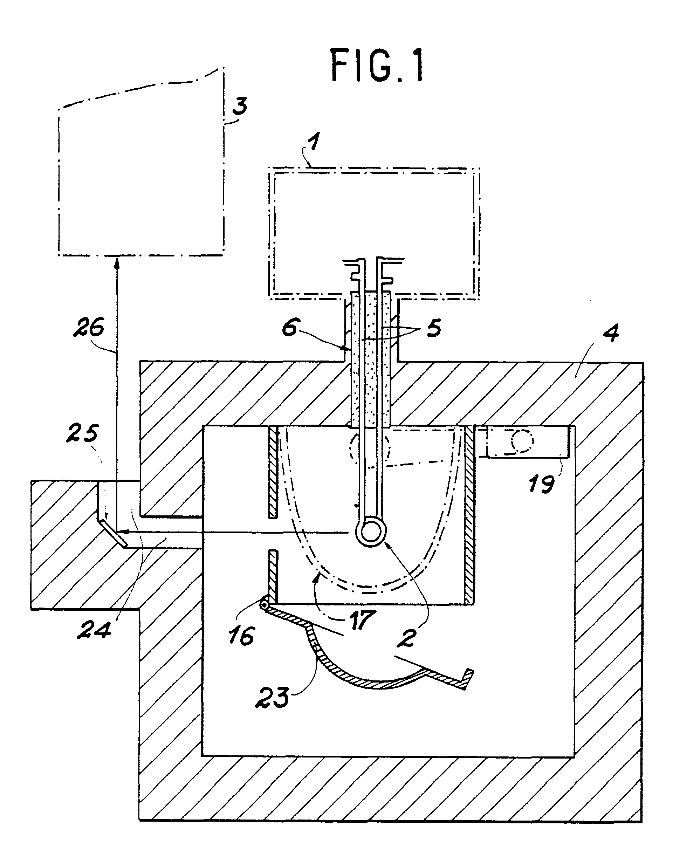

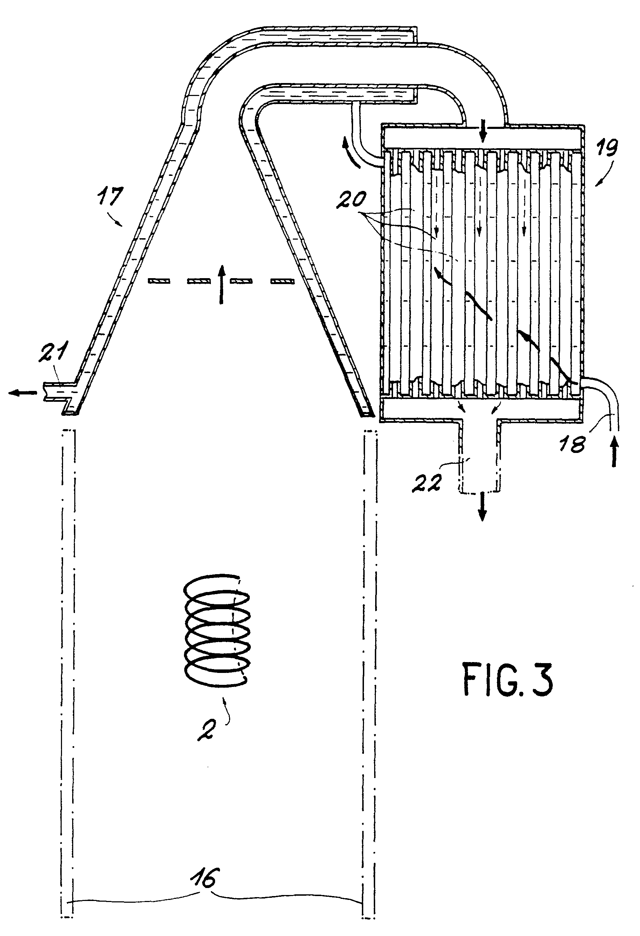

L'enceinte blindée 4 est équipée, selon une seconde disposition de l'invention, d'une cage de Faraday comprenant notamment deux plaque verticales 16 en regard et placées de part et d'autre de l'inducteur 2, comme le montrent les figures 1 et 3. Les deux plaques 16 sont reliées entre elles par une plaque articulée 23 jouant le rôle de porte. Le rôle de cette cage de Faraday est d'éviter le rayonnement haute fréquence de l'inducteur dans l'ensemble de l'enceinte étanche 4. Cette cage de Faraday est reliée à la masse des pièces métalliques de l'enceinte blindée.

Selon une troisième disposition de l'invention, l'enceinte blindée 4 est équipée d'une hotte d'aspiration d'air 17 (figures 1 et 3) placée au-dessus de l'inducteur 2. Cette hotte complète électriquement, avec les plaques 16, la cage de Faraday précitée. La hotte, de forme tronconique, est à double paroi. De l'eau de refroidissement est introduite par une canalisation d'arrivée 18 dans un échangeur thermique 19 où elle circule autour des tubes 20. En sortant de l'échangeur 19, l'eau circule entre les deux parois de la hotte pour la refroidir, avant de ressortir par une canalisation de sortie 21. L'air, aspiré par la hotte, est introduit dans cet échangeur thermique pour y être refroidi en circulant à l'intérieur des tubes 20. Il est ensuite évacué par une canalisation 22.

Selon une quatrième disposition de l'invention (figure 1), il est prévu à travers une paroi blindée de l'enceinte étanche 4 une sortie en chicane 24 équipée d'un miroir 25 pour permettre, à partir du plasma situé à l'intérieur de l'inducteur à spires 2, d'en former une image optique dirigée vers le spectromètre 3 comme le schématise le trajet optique 26.

L'invention peut évidemment revêtir bien d'autres formes concrètes que le mode de mise en œuvre décrit ci-dessus volontairement de manière schématique, mais néanmoins très précise d'un point de vue fonctionnel.

## Revendication

Enceinte étanche blindée équipée pour être utilisable en spectrométrie d'émission, caractérisée en ce qu'elle comporte, en association :

un dispositif de traversée (6) d'une paroi de l'enceinte blindée (4), destiné à faire passer deux tubes creux (5) d'une longueur comprise entre 20 et 40 cm, ces tubes appartenant à un inducteur (2) de source à plasma comprenant de plus des spires en forme de tube creux reliant les extrémités des tubes creux (5) situées à l'intérieur de l'enceinte (4), les autres extrémités de ces tubes (5) étant prévues pour être raccordées électriquement à un générateur à haute fréquence et pour communiquer avec des moyens de circulation d'air de refroidissement ; le dispositif de traversée comprenant des moyens (10, 11 et 12) d'isolation électrique des tubes entre eux et par rapport à des parties métalliques de la paroi, et de protection biologique,

une cage de Faraday (16), à l'intérieur de laquelle est placé ledit inducteur (2), et mise à la masse avec les parties métallique de la paroi,

une hotte d'aspiration d'air (17) placé au-dessus de l'inducteur, et comprenant des moyens de refroidissement (18 à 22) de cet air, et

une sortie en chicane (24) de la paroi blindée équipée d'un miroir (25) pour permettre avec protection bilogique la sortie optique d'une image du plasma.

## Claim

Shielded air-tight enclosure equipped to be usable in emission spectrometry, characterized in that it includes, in association :

a device for passing through a wall of the shielded enclosure (4) for the passage of two hollow tubes (5) having a length between 20 and 40 cm, said tubes (5) belonging to a plasma source inductor, which also incorporates hollow tube coils linking the ends of the hollow tubes positioned within the enclosure, the other ends of said tubes being electrically connected to a high frequency generator and for communicating with cooling air circulating means, the passage device having means for the electrical insulation of the tubes with respect to one another and with respect to the metal parts of the wall, as well as biological protection means,

a Faraday cage (16) within which the said inductor (2) is placed and grounded with the metal parts of the wall,

an air aspiration hood (17) placed above the inductor, and including means (18 to 22) for cooling this air, and

a baffle outlet (24) of the shielded wall, equipped with a mirror (25) to permit, with biological protection, the optical output of an image of the plasma.

## Patentanspruch

Dichtes Panzergehäuse für die Verwendung bei der Strahlenspektromie, dadurch gekennzeichnet, daß es in Gemeinschaft enthält :

eine Wanddurchführung (6) des Panzergehäuses (4), die dazu bestimmt ist, zwei hohle Rohre (5) von einer Länge zwischen 20 und 40 cm durchzulassen, welche Rohre zu einer Erregerwicklung (2) einer Plasmaquelle gehören, darüber hinaus enthaltend Windungen in Form von Hohlrohren, die die Enden der hohlen Rohre (5) im Inneren des Gehäuses (4) miteinander verbinden, während die anderen Enden dieser Rohre dazu vorgesehen sind, elektrisch mit einem Hochfrequenzgenerator verbunden zu werden und um mit Kühlluftzirkulationseinrichtungen in Verbindung zu treten ; welche Durchführung Einrichtungen (10, 11 und 12) für die elektrische Isolation der Rohre voneinander und gegenüber metallischen Teilen der Wand und für den biologischen Schutz enthält,

einen Faraday'schen Käfig (16), in dessen Inneren die genannte Erregerwicklung (2) angeordnet ist und der zusammen mit den Metallteilen der Wand mit Masse verbunden ist,

einen Luftabzug (17), der über der Erregerwicklung angeordnet ist und Kühleinrichtungen (18 bis 22) für diese Luft enthält, und

einen Ausgang (24) mit Hindernis durch die Panzerwand, der mit einem Spiegel (25) versehen ist, um mit biologischem Schutz einen optischen Ausgang eines Abbilds des Plasmas zu ermöglichen.

# FIG.1

FIG.2

EP 0 161 991 B1

FIG. 3